# EUROPEAN PATENT SPECIFICATION

(11) **EP 3 681 318 B1**
(45) Date of publication and mention of the grant of the patent: **12.07.2023**
(21) Application number: 18774139.2
(22) Date of filing: 04.09.2018
(51) Int. Cl.: A23L 33/00, A23L 33/20, A23K 50/40, A61P 3/10, A61P 9/10

(54) **METHODS FOR MIMICKING CHRONIC CALORIC RESTRICTION AND FOR IMPARTING HEALTH BENEFITS TO AN ANIMAL**
METHODE ZUR NACHAHMUNG DER CHRONISCHEN KALORIENBESCHRÄNKUNG UND ZUR GEWÄHRUNG VON GESUNDHEITSVORTEILEN FÜR EIN TIER
METHODES DE SIMULATION DE RESTRICTION CALORIQUE ET POUR AMELIORER LA SANTE D'UN ANIMAL

(30) Priority: 12.09.2017 US 201762557361 P
(43) Date of publication of application: 22.07.2020
(73) Proprietor: Société des Produits Nestlé S.A., 1800 Vevey (CH)
(72) Inventor: PAN, Yuanlong, Chesterfield, MO 63017 (US)
(74) Representative: Elkington and Fife LLP
(86) International application number: PCT/IB2018/056744
(87) International publication number: WO 2019/053554

(56) References cited:
- WO-A1-2018/138090
- US-A1- 2014 112 909
- US-A1- 2015 140 164
- US-A1- 2017 000 183
- KLEMPEL MONICA C ET AL: "Alternate day fasting (ADF) with a high-fat diet produces similar weight loss and cardio-protection as ADF with a low-fat diet", METABOLISM, CLINICAL AND EXPERIMENTAL, vol. 62, no. 1, 2013, pages 137-143, XP028960541, ISSN: 0026-0495, DOI: 10.1016/J.METABOL.2012.07.002
- SOGAWA H ET AL: "Influence of short-term repeated fasting on the longevity of female (NZB x NZW)F1 mice", MECHANISMS OF AGEING AND DEVELOPMENT, ELSEVIER SEQUOIA, LAUSANNE, CH, vol. 115, 1 January 2000 (2000-01-01), pages 61-71, XP003014700, ISSN: 0047-6374, DOI: 10.1016/S0047-6374(00)00109-3
- MONICA C KLEMPEL ET AL: "Intermittent fasting combined with calorie restriction is effective for weight loss and cardio-protection in obese women", NUTRITION JOURNAL, BIOMED CENTRAL, GB, vol. 11, no. 1, 21 November 2012 (2012-11-21), page 98, XP021129070, ISSN: 1475-2891, DOI: 10.1186/1475-2891-11-98
- M N Harvie ET AL: "The effects of intermittent or continuous energy restriction on weight loss and metabolic disease risk markers: a randomized trial in young overweight women", International Journal of Obesity, vol. 35, no. 5, 5 October 2010 (2010-10-05), pages 714-727, XP055525455, London ISSN: 0307-0565, DOI: 10.1038/ijo.2010.171

## Description

### BACKGROUND OF THE INVENTION

### Field of the Invention

The invention relates generally to non-therapeutic methods and to diets and kits for providing health benefits for an animal by mimicking chronic caloric restriction and by using specific intermittent caloric restriction diets, and particularly to methods for using feeding patterns for providing such health benefits.

### Description of Related Art

Chronic caloric restriction (CR) without malnutrition has been proven to be able to enhance both mean and maximum lifespan, promote healthy lifespan (lifespan free-from chronic diseases), and prevent, delay or reduce the incidence of many chronic diseases including cardiovascular disease, cancer, diabetes, hypertension, stroke, dementia, Alzheimer's disease, Parkinson's disease. Unfortunately, it is very difficult to practice CR for above-mentioned health benefits due to the requirement of reducing daily caloric intake for lifetime.

In addition, when managing an animal's weight, particularly promoting weight loss, it is a very common practice to reduce caloric intake by restricting the amount of food available to the animal on a chronic and daily basis. While chronic caloric restriction has been associated with numerous health benefits, challenges remain. For example, restricting daily food intake chronically causes the animal to be hungry. Hunger is an unpleasant state that often causes one or more unwanted behaviors by the hungry animal, *e.g.,* begging, seeking food, binge eating, and the like. In addition, managing weight loss by chronic and daily caloric reduction may cause undesirable results that affect body composition. Animals that lose weight often lose both fat body mass and lean body mass and reduce their daily energy expenditure. Reduced daily energy expenditure caused by chronic daily caloric reduction during weight loss makes animals to regain their lost weight easily and makes it very difficult for the animals to maintain their ideal body weight after weight loss. Therefore, it is frequently more desirable when losing weight to lose excess fat body mass while preserving as much lean body mass as possible and maintaining higher daily energy expenditure.

Several methods for mimicking CR are known in the art. For example every other day fasting can enhance lifespan (Goodrick et al., Mech Ageing Dev 1990;55:69 - 87). But fasting every other day for lifetime is also very difficult to practice. Fasting 4 consecutive days every two weeks also can increase longevity (Sogawa H, Kubo C. Mech Ageing Dev 2000; 115: 61-71.), but this approach is also very difficult for most people and animals. A fasting-mimicking diet (FMD) has been shown to reduce biomarkers and risk factors for aging, diabetes, cancer and cardiovascular disease (Wei et al., Sci. Transl. Med, 2017, 9: waai8700). The FMD is low in calories, sugar, and protein, but high in unsaturated fats. Also, people have to consume the FMD five consecutive days per month for a minimum of three months in order to receive any benefit.

Methods for managing weight loss and body mass are known in the art. For example, US8158683 discloses using extracts of aronia to promote weight loss. US8143215 discloses promoting weight loss by applying satiety-enhancing or appetite-suppressing composition comprising tastant onto food. US7989009 discloses a method for promoting weight loss using black tea extract, white tea extract, guarana extract, oolong tea extract, green mate extract, thiamine, choline and N-acetylcysteine. US6204291 discloses a process for promoting weight loss in overweight dogs using L-carnitine. US7744930 discloses compositions, methods and kits for enhancing weight loss while inhibiting loss of lean body mass that use soy protein and chromium in form of salt or chelate. US20040077556A1 discloses methods for promoting weight loss and lean muscle mass using epigallocatechin gallate, caffeine, and l-tyrosine. US7850997 discloses methods of enhancing lean body mass and exercise performance using L-arginine alpha amino n-butyrate. US5804596 discloses a method for using forskohlin for promoting lean body mass and treating mood disorders. US20070082026A1 discloses methods for reducing caloric intake and controlling weight using dietary fiber. US8226973 discloses using isoflavones for reducing accumulation of body fat in male mammals. US20110281245A1 discloses a system for regulating caloric intake by managing food dishes. U20100109876A1 discloses devices, systems, and methods for controlling caloric intake by modifying consumer behavior. US20030072846A1 discloses packages useful for controlling dietary caloric intake. US20100126588A1 discloses a programmed intermittent automatic watering system for animals.

Additionally, US8968804 and US91073426 disclose methods for promoting weight loss and minimizing loss of lean body mass by feeding the animal for a first period a first diet containing calories that meet the animal's maintenance energy requirements and feeding the animal for a second period a second diet containing calories that do not meet the animal's maintenance energy requirements, where such periods can range for days to weeks.

These methods are often at least partially effective for mimicking CR, managing weight loss and/or lean body mass and related conditions. However, these methods may not provide all desired health benefits or provide adverse conditions or very difficult to practice. There is, therefore, a need for new methods for providing health benefits associated with chronic caloric restriction without the need to reduce caloric content on a daily basis.

### SUMMARY OF THE INVENTION

A non-therapeutic method for feeding an animal to impart a health benefit to the animal via intermittent caloric restriction dieting, the method comprising: feeding the animal a caloric maintenance diet containing calories that meet the animal's maintenance energy requirements for a caloric maintenance period; and feeding the animal a caloric reduction diet containing from about 40% to about 80% of the calories contained in the caloric maintenance diet for a caloric reduction period, wherein the caloric maintenance period and the caloric reduction period are in a ratio of about 4:3 or about 5:2.

A non-therapeutic method for feeding an animal to impart a health benefit to the animal via intermittent caloric restriction dieting, the method comprising: feeding the animal a diet without limiting caloric intake for an ad libitum feeding period; and feeding the animal a caloric reduction diet containing from about 40% to about 80% of calories that meet the animal's maintenance energy requirements for a caloric reduction period, wherein the ad libitum period and the caloric reduction period are in a ratio of about 4:3 or about 5:2.

A caloric maintenance diet containing calories that meet an animal's maintenance energy requirements and a caloric reduction diet containing from about 40% to about 80% of the calories contained in the caloric maintenance diet for use in a method of preventing hypertriglyceridemia, treating hypertriglyceridemia, preventing atherosclerosis, treating atherosclerosis, preventing cardiovascular disease, treating cardiovascular disease, minimizing oxidative stress, preventing age-related diseases, treating age-related diseases, preventing cancer, treating cancer, preventing Alzheimer's disease, treating Alzheimer's disease, preventing Parkinson's disease, treating Parkinson's disease, preventing neurodegenerative diseases, treating neurodegenerative diseases, preventing tissue damage, treating tissue damage, preventing high blood pressure, treating high blood pressure, preventing inflammatory conditions, treating inflammatory conditions, preventing attention deficit hyperactivity disorder (ADHD), treating attention deficit hyperactivity disorder (ADHD), preventing Lafora disease, treating Lafora disease, preventing fragile X syndrome, treating fragile X disorder, treating sickle-cell diseases, preventing lichen planus, treating lichen planus, preventing vitiligo, treating vitiligo, preventing autism, treating autism, preventing infections, treating infections, preventing chronic fatigue syndrome, treating chronic fatigue syndrome, preventing depression, treating depression, preventing Asperger syndrome, or treating Asperger syndrome in an animal, the method comprising: feeding the animal the caloric maintenance diet containing calories that meet the animal's maintenance energy requirements for a caloric maintenance period; and feeding the animal the caloric reduction diet containing from about 40% to about 80% of the calories contained in the caloric maintenance diet for a caloric reduction period; wherein the caloric maintenance period and the caloric reduction period is in a ratio of about 4:3 or about 5:2.

A kit defined by the claims comprising a complete and balanced diet and a complete and balanced caloric reduction diet containing from about 40% to about 80% of calories that meet an animal's maintenance energy requirements for use in a method of preventing hypertriglyceridemia, treating hypertriglyceridemia, preventing atherosclerosis, treating atherosclerosis, preventing cardiovascular disease, treating cardiovascular disease, minimizing oxidative stress, preventing age-related diseases, treating age-related diseases, preventing cancer, treating cancer, preventing Alzheimer's disease, treating Alzheimer's disease, preventing Parkinson's disease, treating Parkinson's disease, preventing neurodegenerative diseases, treating neurodegenerative diseases, preventing tissue damage, treating tissue damage, preventing high blood pressure, treating high blood pressure, preventing inflammatory conditions, treating inflammatory conditions, preventing attention deficit hyperactivity disorder (ADHD), treating attention deficit hyperactivity disorder (ADHD), preventing Lafora disease, treating Lafora disease, preventing fragile X syndrome, treating fragile X disorder, treating sickle-cell diseases, preventing lichen planus, treating lichen planus, preventing vitiligo, treating vitiligo, preventing autism, treating autism, preventing infections, treating infections, preventing chronic fatigue syndrome, treating chronic fatigue syndrome, preventing depression, treating depression, preventing Asperger syndrome, and treating Asperger syndrome in an animal, the method comprising: feeding the animal the diet without a limit on caloric intake for an ad libitum feeding period; and feeding the animal the caloric reduction diet containing from about 40% to about 80% of calories that meet the animal's maintenance energy requirements for a caloric reduction period; wherein the ad libitum period and the caloric reduction period is in a ratio of about 4:3 or about 5:2.

Other and further objects, features, and advantages of the present invention will be readily apparent to those skilled in the art.

### DETAILED DESCRIPTION OF THE INVENTION

### Definitions

The term "animal" means a human or other animal that can benefit from one or methods for promoting weight loss by an animal, promoting weight loss by an animal while preventing or minimizing loss of lean body mass by the animal, preventing a reduction in energy metabolism by an animal, reducing the risk of regaining weight by an animal after weight loss, and ameliorating undesirable animal behaviors associated with reduced caloric intake, including avian, bovine, canine, equine, feline, hircine, murine, ovine, and porcine animals.

The term "companion animal" means domesticated animals such as cats, dogs, rabbits, guinea pigs, ferrets, hamsters, mice, gerbils, horses, cows, goats, sheep, donkeys, pigs, and the like. In one aspect, companion animal can refer to a dog and/or cat.

The term "intermittent period(s)" or "intermittently" means a first period and a second period of the same or different durations of time that reoccur at defined intervals. For example, daily intermittent periods would involve doing one act for one day, doing a different act on the following day, and possibly repeating the pattern for as many two day periods as needed or desirable. Similarly, one act such as feeding an animal could be done for a week and a second act such as feeding an animal a different diet could be done for two weeks, and the cycle repeated for a year or for the lifetime of the animal. The same would apply for periods of multiple days, weeks, months, quarters, years, and the like, *e.g.,* daily, every other day, every other three days, every other four days, every other five days, every other six days, weekly, every other week, every other two weeks, every other three weeks, monthly, every other month, quarterly, yearly, and the like.

The term "in conjunction" means that an animal is fed, for a first period, a first diet containing calories that meet the animal's maintenance energy requirements and fed, for a second period, a second diet containing calories that do not meet the animal's maintenance energy requirements according to the invention and the animal is administered a different compound, composition, or other agent (1) together in dietary composition or (2) separately at the same or different frequency using the same or different administration routes at about the same time or periodically. "Periodically" means that the agent is administered on a dosage schedule acceptable for a specific agent and that the food is fed to an animal routinely as appropriate for the particular animal. "About the same time" generally means that the food and agent are administered at the same time or within about 72 hours of each other. "In conjunction" specifically includes administration schemes wherein agent is administered for a prescribed period and the dietary compositions of the invention are administered indefinitely.

The term "complete and balanced" when referring to a food composition means a food composition that contains all known required nutrients in appropriate amounts and proportions based on recommendations of recognized authorities in the field of animal nutrition, and are therefore capable of serving as a sole source of dietary intake to maintain life or promote production, without the addition of supplemental nutritional sources. Nutritionally balanced pet food and animal food compositions are widely known and widely used in the art, *e.g.,* complete and balanced food compositions formulated according to standards established by the Association of American Feed Control Officials (AAFCO).

The term "single package" means that the components of a kit are physically associated in or with one or more containers and considered a unit for manufacture, distribution, sale, or use. Containers include, but are not limited to, bags, boxes, cartons, bottles, packages of any type or design or material, over-wrap, shrink-wrap, affixed components (*e.g.,* stapled, adhered, or the like), or combinations thereof. A single package may be containers of individual dietary compositions of the invention physically associated such that they are considered a unit for manufacture, distribution, sale, or use.

The term "virtual package" means that the components of a kit are associated by directions on one or more physical or virtual kit components instructing the user how to obtain the other components, *e.g.,* a bag or other container containing one component and directions instructing the user to go to a website, contact a recorded message or a fax-back service, view a visual message, or contact a caregiver or instructor to obtain instructions on how to use the kit or safety or technical information about one or more components of a kit.

The term "about" means plus or minus 20%, preferably plus or minus 10%, more preferably plus or minus 5%, most preferably plus or minus 2%.

All percentages expressed herein are by weight or amount of the total weight or amount of the composition unless expressed otherwise.

The invention is not limited to the particular methodology, protocols, and reagents described herein because they may vary. Further, the terminology used herein is for the purpose of describing particular embodiments only and is not intended to limit the scope of the present invention.

As used herein, the singular form of a word includes the plural, and vice versa, unless the context clearly dictates otherwise. Thus, the references "a", "an", and "the" are generally inclusive of the plurals of the respective terms. Similarly, the words "comprise", "comprises", and "comprising" are to be interpreted inclusively rather than exclusively. Likewise the terms "include", "including" and "or" should all be construed to be inclusive, unless such a construction is clearly prohibited from the context. Similarly, the term "examples," particularly when followed by a listing of terms, is merely exemplary and illustrative and should not be deemed to be exclusive or comprehensive. All embodiments using "comprise", "comprises", or "comprising" can be substituted with "essentially consisting of" or "consisting of'.

Unless defined otherwise, all technical and scientific terms and any acronyms used herein have the same meanings as commonly understood by one of ordinary skill in the art in the field of the invention. Although any compositions, methods, articles of manufacture, or other means or materials similar or equivalent to those described herein can be used in the practice of the present invention, the preferred compositions, methods, articles of manufacture, or other means or materials are described herein.

### The Invention

The invention is defined by the claims.

As discussed above, the invention basically relates to non-therapeutic methods for mimicking caloric restriction to impart a non-therapeutic benefit to an animal, as well as to kits for use in a method for mimicking chronic caloric restriction to impart a health benefit in an animal can comprise feeding the animal a caloric maintenance diet containing calories that meet the animal's maintenance energy requirements for a caloric maintenance period and feeding the animal a caloric reduction diet containing from about 40% to about 80% of the calories contained in the caloric maintenance diet for a caloric reduction period, where the caloric maintenance period and the caloric reduction period is in a ratio of about 4:3 to about 5:2.

Notably, the present inventor has unexpectedly discovered that animals fed a specific intermittent feeding pattern, a 4:3 period ratio, with a specific caloric reduction will mimic a chronic caloric restriction diet. For example, an animal can be fed a maintenance diet for a period of 4 days and a reduction diet for a period of 3 days. Generally, the reduction diet contains from about 40% to about 80% of the calories contained in the caloric maintenance diet. In one aspect, the reduction diet can have about 50% of the calories.

As such, by way of the present method, the animal can receive health benefits including: preserving leaning body mass, preventing or minimizing loss of lean body mass during the weight loss by the animal, preventing a reduction in energy metabolism by the animal, reducing the risk of regaining weight by the animal after weight loss, maintaining ideal body weight, increasing longevity, increasing healthy lifespan, maintaining healthy metabolism, maintaining normal blood glucose, lipid, and cholesterol, reducing incidence of cancer, treatment of cancer, prevention of cancer, reduced incidence of cardiovascular disease, treatment of cardiovascular disease, prevention of cardiovascular disease, preventing type II diabetes, preventing prediabetes, treating type I diabetes, treating type II diabetes, treating prediabetes, reducing IGF-1 levels, maintaining normal blood pressure, preventing hypertension, maintaining normal brain function, promoting healthy brain aging, preventing and treating dementia including Alzheimer's disease, preventing and treating stroke, preventing and treating Parkinson's disease, preventing and treating autoimmune diseases, reducing inflammation and oxidative stress and damage, promoting skeletal muscle health, and preventing and treating sarcopenia, preventing and treating osteoporosis, preventing and treating osteoarthritis, and ameliorating undesirable animal behaviors associated with reduced caloric intake.

Additionally, by way of the present method, the animal can receive health benefits including preventing, treating, minimizing, and/or reducing the risk of the following conditions/diseases: hypertriglyceridemia, atherosclerosis, cardiovascular disease, oxidative stress, age-related diseases, cancer, Alzheimer's disease, Parkinson's disease, neurodegenerative diseases, tissue damage, high blood pressure, inflammatory conditions, attention deficit hyperactivity disorder (ADHD), Lafora disease, fragile X disorder, sickle-cell diseases, lichen planus, vitiligo, autism, infections, chronic fatigue syndrome, depression, and/or Asperger syndrome.

As discussed herein, a method for feeding an animal to impart a health benefit to the animal, can comprise feeding the animal a diet without limiting caloric intake for an ad libitum period and feeding the animal a caloric reduction diet containing from about 40% to about 80% of calories that meet the animal's maintenance energy requirements for a caloric reduction period. Generally, the ad libitum period and the caloric reduction period are in a ratio of about 4:3. Additionally, in one embodiment, the ad libitum period and the caloric reduction period can be consecutive.

Notably, the present inventor has unexpectedly discovered that animals fed a specific intermittent feeding pattern, a 4:3 period ratio, with a specific caloric reduction will provide health benefits, such as weight loss benefits and weight maintenance, without limiting calories during an ad libitum period. For example, an animal can be fed any diet for a period of 4 days and a reduction diet for a period of 3 days. Generally, the reduction diet contains from about 40% to about 80% of calories that meet the animal's maintenance energy requirements. In one aspect, the caloric reduction diet can contain from about 40% to about 60% of the calories needed to meet the animal's daily maintenance requirement for energy. In another aspect, the caloric reduction diet can contain about 50% of the calories needed to meet the animal's daily maintenance requirement for energy. In another aspect, the reduction in caloric intake can be exclusively from reduced dietary carbohydrates.

In an embodiment, a non-therapeutic method for feeding an animal to impart a health benefit to the animal via intermittent caloric restriction dieting comprises feeding the animal a caloric maintenance diet containing calories that meet the animal's maintenance energy requirements for a caloric maintenance period and feeding the animal a caloric reduction diet containing from about 40% to about 80% of the calories contained in the caloric maintenance diet for a caloric reduction period, where the caloric maintenance period and the caloric reduction period are in a ratio of about 4:3 or about 5:2. In one aspect, the ratio can be 4:3. Other aspects are discussed herein.

In another embodiment, a non-therapeutic method for feeding an animal to impart a health benefit to the animal via intermittent caloric restriction dieting comprises feeding the animal a diet without limiting caloric intake for an ad libitum feeding period and feeding the animal a caloric reduction diet containing from about 40% to about 80% of calories that meet the animal's maintenance energy requirements for a caloric reduction period, where the ad libitum period and the caloric reduction period are in a ratio of about 4:3 or about 5:2. In one aspect, the ratio can be 4:3. Other aspects are discussed herein.

While feeding for the caloric reduction period, the caloric maintenance period, and/or the ad libitum period as described can be sufficient, the present methods also include embodiments where the feeding pattern is repeated for at least two cycles, for several cycles, for as long as the animal benefits from the feeding pattern (e.g., achieves a desired weight loss), or for the life of the animal.

While the present methods contemplate the use of the present methods over any cycle of time, such as a 5 day, 7 day, 10 day, 14 day, etc., where, within the cycle, individual maintenance or ad libitum periods and restrictions periods are in a ratio of 4:3, generally the caloric maintenance period or ad libitum period can be 4 days and the caloric reduction period can be 3 days. Additionally, while the individual feedings/days can be spread throughout the cycle in a non-consecutive manner, e.g. cycle of 1 week having 2 days maintenance or ad libitum, then 2 days restricted, then 2 days maintenance or ad libitum, then 1 day restricted, generally, the individual periods can be consecutive, e.g., cycle of 1 week having 4 days maintenance or ad libitum, then 3 days restricted. As such, in one aspect, the 4 days and the 3 days can be consecutive and in another aspect, the 4 days and the 3 days can be non-consecutive.

As discussed herein, while the present intermittent dieting can be for any amount of time and for any amount of cycles, in one embodiment, the feeding for the caloric maintenance period or the ad libitum period and the feeding for the caloric reduction period are repeated over a combined period of at least 1 month. In one aspect, the feeding for the caloric maintenance period or the ad libitum period and the feeding for the caloric reduction period can be repeated over a period of at least 6 months.

In one embodiment, the methods of the invention are implemented in conjunction with the administration of a weight loss agent, or any other agent that imparts a health benefit. Any such agents that are compatible with the feeding patterns of the invention can be used in the invention. In various embodiments, the agent can be carnitine, isoflavones, pyruvate, fish oil, DHA, EPA, fibers, calcium, resistant starch, medium chain triglycerides, green tea extract, phentermine, diethylpropion, orlistat, sibutramine, megestrol, phenylpropanolamine, oxandrolone, oleoylethanolamide, probiotics, ephedra, conjugated linoleic acid, glucomannan, and mixtures thereof.

The methods described herein can be useful for managing weight loss and related functions described herein for any animal. In one aspect, such methods can be directed to companion animals, including those whose diet is controlled by an owner or caregiver. In one specific aspect, the animals can be dogs and/or cats.

Also discussed herein are kits suitable for implementing the methods of the invention. The kits comprise in separate containers in a single package or in separate containers in a virtual package, as appropriate for the kit component, (1) a complete and balanced first food composition containing calories that meet an animal's maintenance energy requirements; (2) a complete and balanced second food composition containing calories that do not meet the animal's maintenance energy requirements; and (3) instructions for using the food compositions for at least one of promoting weight loss by an animal, promoting weight loss by an animal while preventing or minimizing loss of lean body mass by the animal, preventing a reduction in energy metabolism by an animal, reducing the risk of regaining weight by an animal after weight loss, maintaining ideal body weight, increasing longevity, reducing incidence of cancer, treating cancer, preventing cancer, reducing incidence of cardiovascular disease, treating cardiovascular disease, preventing cardiovascular disease, preventing type II diabetes, preventing prediabetes, treating type I diabetes, treating type II diabetes, treating prediabetes, reducing IGF-1 levels, and ameliorating undesirable animal behaviors associated with reduced caloric intake by feeding the animal for a first period the first food composition and feeding the animal for a second period the second food composition. The kits may further comprise one or more of one or more weight loss or other health imparting agents.

When the kit comprises a virtual package, the kit is limited to instructions in a virtual environment in combination with one or more physical kit components. Generally, the kit contains the food compositions and other physical components in amounts sufficient to implement the methods of the invention and the virtual package contains the instructions relating to using the physical components to implement the methods of the invention.

Also discussed herein are a means for communicating information about or instructions for one or more of promoting weight loss by an animal, promoting weight loss by an animal while preventing or minimizing loss of lean body mass by the animal, preventing a reduction in energy metabolism by an animal, reducing the risk of regaining weight by an animal after weight loss, maintaining ideal body weight, increasing longevity, reducing incidence of cancer, treating cancer, preventing cancer, reducing incidence of cardiovascular disease, treating cardiovascular disease, preventing cardiovascular disease, preventing type II diabetes, preventing prediabetes, treating type I diabetes, treating type II diabetes, treating prediabetes, reducing IGF-1 levels, and ameliorating undesirable animal behaviors associated with reduced caloric intake, or other health benefits as discussed herein, by feeding the animal for caloric maintenance period a caloric maintenance diet containing calories that meet the animal's maintenance energy requirements and feeding the animal for a caloric reduction period a caloric reduction diet containing calories that do not meet the animal's maintenance energy requirements, and optionally a weight loss or other health imparting agent. The means comprises a document, digital storage media, optical storage media, audio presentation, or visual display containing the information or instructions. In certain embodiments, the communication means is a displayed web site, visual display, brochure, product label, package insert, advertisement, handout, public announcement, audiotape, videotape, DVD, CD-ROM, computer readable chip, computer readable card, computer readable disk, computer memory, or combination thereof containing such information or instructions.

Useful information includes one or more of (1) recommended feeding schedules for the animal, particularly based on the animal's species and body condition (*e.g*., overweight or obese), (2) recommended weight loss or health imparting agent to be administered in conjunction with the use of the recommended feeding pattern, and (3) contact information for animals or their caregivers to use if they have a question about the invention and its use.

### EXAMPLES

The invention can be further illustrated by the following examples, although it will be understood that these examples are included merely for purposes of illustration and are not intended to limit the scope of the invention unless otherwise specifically indicated.

### Example 1

Eight weeks old rats were fed a high fat diet to promote weight gain for 2 months, and then the rats were fed a standard AIN93M diet (Product D10012M available from Research diets, Inc.) for 3 week to determine each rat's maintenance energy requirement (MER). The rats were randomized into 11 groups. The rats were put on the weight loss regimens to induce weight loss for 6 months as shown in Table 1 with one of the diets as shown in Table 2.

**Table 1**

| Reduction in MER | Once a week (# of rats) | Twice a week (# of rats) | Three times a week (# of rats) | Seven days a week (# of rats) |
|---|---|---|---|---|
| 0% | | | | 12 |
| 25% | 12 | 12 | 12 | 12 (CCR) |
| 50% | 12 | 12 | 12 | |
| 75% | 12 | 12 | 12 | |

**Table 2**

| Components | Control Diet | 25% CR Diet | 50% ICR Diet | 75% ICR Diet |
|---|---|---|---|---|
| Protein % | 12.57 | 16.76 | 25.15 | 49.23 |
| Fat % | 4.00 | 5.32 | 8.00 | 15.10 |
| Ash % | 2.80 | 3.73 | 5.60 | 11.20 |
| C. Fiber % | 5.00 | 5.60 | 7.20 | 10.50 |
| Moisture % | 10.00 | 10.00 | 10.00 | 10.00 |
| Carbohydrate% | 65.63 | 58.59 | 44.06 | 3.97 |

The invention can be further illustrated by the following examples, although it will be understood that these examples are included merely for purposes of illustration and are not intended to limit the scope of the invention unless otherwise specifically indicated.

As shown in Table 1, the 11 groups were fed as listed below.

Control group: the rats that received the AIN-93M diet (Control) continued with the same feeding pattern for 6 months.

The 25% Caloric Restriction group (CR), were fed daily with the 25% CR diet to meet 75% of maintenance energy requirement (MER) for 6 months.

A group with 25% intermittent caloric restriction once per week (6:1-25CR): The rats were fed 75% of their MER one day with the 25% CR diet and 100% of their MER with the control diet for six days.

A group with 25% intermittent caloric restriction twice per week (5:2-25CR): The rats were fed 75% of their MER two days with the 25% CR diet and 100% of their MER with the control diet for 5 days.

A group with 25% intermittent caloric restriction three per week (4:3-25CR): The rats were fed 75% of their MER 3 days with the 25% CR diet and 100% of their MER with the control diet for 4 days.

A group with 50% intermittent caloric restriction once per week (6:1-50CR): The rats were fed 50% of their MER one day with the 50% ICR diet and 100% of their MER with the control diet for six days.

A group with 50% intermittent caloric restriction twice per week (5:2-50CR): The rats were fed 50% of their MER two days with the 50% ICR diet and 100% of their MER with the control diet for 5 days.

A group with 50% intermittent caloric restriction three per week (4:3-50CR): The rats were fed 50% of their MER 3 days with the 50% ICR diet and 100% of their MER with the control diet for 4 days.

A group with 75% intermittent caloric restriction once per week (6:1-75CR): The rats were fed 25% of their MER one day with the 75% ICR diet and 100% of their MER with the control diet for six days.

A group with 75% intermittent caloric restriction twice per week (5:2-75CR): The rats were fed 25% of their MER two days with the 75% ICR diet and 100% of their MER with the control diet for 5 days.

A group with 75% intermittent caloric restriction three per week (4:3-75CR): The rats were fed 25% of their MER three days with the 75% ICR diet and 100% of their MER with the control diet for 4 days.

Rats were lodged individually per cage, in 12-h light/dark cycles, and given water ad libitum. Body composition were measured using the EchoMRI-700 Body Composition Analyzer (Echo Medical Systems, Houston, Texas). Blood were collected (0.5 ml) for the measurements of biochemical parameters from rats in all groups at end of the study. After 6 months of dietary intervention, after 12 h of overnight fasting, samples were collected including blood collection (week 24) and tissues dissection and weighing were performed. Serum Insulin (Mercodia, Uppsala, Sweden) and IGF-1(R&D systems, Minneapolis, USA) levels were quantified using a rat ELISA kits. Serum glucose was determined using TRUE result^{™} (Florida, USA) Blood glucose meter. Homeostatic model assessment (HOMA) was calculated using the values from insulin and glucose. The results are presented in Tables 3-5.

**Table 3**

| **Diets*** | **Baseline Body Weight (g)** | **2 months Body Weight (g)** | **4 months Body Weight (g)** | **6 months Body Weight (g)** |
|---|---|---|---|---|
| **Control** | 469.46 | 475.28 | 502.50 | 497.16 |
| **CR** | 473.97 | 419.23 | 409.55 | 386.21 |
| **6:1-25CR** | 474.93 | 469.14 | 491.78 | 486.42 |
| **5:2-25CR** | 485.93 | 476.05 | 499.32 | 483.53 |
| **4:3-25CR** | 474.23 | 449.48 | 471.52 | 469.94 |
| **6:1-50CR** | 488.98 | 467.61 | 491.35 | 493.33 |
| **5:2-50CR** | 487.28 | 462.65 | 476.78 | 460.60 |
| **4:3-50CR** | 471.40 | 425.42 | 407.47 | 396.22 |
| **6:1-75CR** | 501.62 | 475.35 | 485.25 | 484.12 |
| **5:2-75CR** | 475.98 | 423.75 | 425.51 | 414.90 |
| **4:3-75CR** | 500.47 | 423.16 | 401.73 | 378.21 |

| | | | | |
|---|---|---|---|---|
| * diets are described using following format (maintenance days):(restricted days)-(percent restricted) as described in paragraphs [0037-47] | | | | |

**Table 4**

| **Diets*** | **Baseline Fat Mass (g)** | **2 months Fat Mass (g)** | **4 months Fat Mass (g)** | **6 months Fat Mass (g)** |
|---|---|---|---|---|
| **Control** | 51.67 | 46.48 | 61.71 | 59.04 |
| **CR** | 62.04 | 31.38 | 31.08 | 21.95 |
| **6:1-25CR** | 61.17 | 59.16 | 71.98 | 71.07 |
| **5:2-25CR** | 63.38 | 56.72 | 66.54 | 56.59 |
| **4:3-25CR** | 60.84 | 49.03 | 64.43 | 55.14 |
| **6:1-50CR** | 63.20 | 55.38 | 70.15 | 60.40 |
| **5:2-50CR** | 62.88 | 49.41 | 57.97 | 43.83 |
| **4:3-50CR** | 59.91 | 31.16 | 30.54 | 16.47 |
| **6:1-75CR** | 64.56 | 49.22 | 60.72 | 51.03 |
| **5:2-75CR** | 61.21 | 35.92 | 42.32 | 30.73 |
| **4:3-75CR** | 64.06 | 21.60 | 23.81 | 11.45 |

| | | | | |
|---|---|---|---|---|
| * diets are described using following format (maintenance days):(restricted days)-(percent restricted) as described in paragraphs [0037-47] | | | | |

**Table 5**

| **Diets*** | **IGF1 (ng/mL)** | **Glucose (mg/dL)** | **Insulin (ng/mL)** |
|---|---|---|---|
| **Control** | 1.20 | 109.45 | 0.55 |
| **CR** | 0.73 | 115.18 | 0.65 |
| **6:1-25CR** | 1.01 | 115.50 | 1.27 |
| **5:2-25CR** | 1.00 | 122.45 | 0.97 |
| **4:3-25CR** | 0.97 | 134.50 | 0.91 |
| **6:1-50CR** | 1.08 | 141.92 | 0.95 |
| **5:2-50CR** | 0.93 | 119.58 | 0.80 |
| **4:3-50CR** | 0.78 | 120.00 | 0.57 |
| **6:1-75CR** | 1.10 | 123.75 | 1.12 |
| **5:2-75CR** | 0.82 | 130.33 | 0.81 |
| **4:3-75CR** | 0.64 | 129.25 | 0.52 |

| | | | |
|---|---|---|---|
| * diets are described using following format (maintenance days):(restricted days)-(percent restricted) as described in paragraphs [0037-47] | | | |

Tables 3-5 show that the rats in the CR group significantly lost body weight, and body fat compared with the baseline and control (Tables 3-4). In addition, rats in the CR group had significantly lower fasting blood insulin and IGF-1 at the end of the study compared with the control group (Table 5).

Unexpectedly, the three intermittent fasting (IF) regimens (once per week, twice per week, and three times per week) at 25% reduction from baseline MER failed to reduce body weight and body fat compared with baseline and control significantly (Tables 3-4). These treatments also did not significantly reduce insulin and IGF-1 compared with control (Table 5). These data show that 25% IF up to three days per week is not effective in mimicking CR phenotype (lower body weight and body fat) and biomarkers (IGF-1 and insulin).

When IF is introduced at 50% restriction from baseline MER, once per week failed to reduce body weight and body fat compared with baseline and control (Tables 3-4). Also, once per week IF at 50% did not reduce insulin and IGF-1 compared with control (Table 3). Twice per week IF at 50% failed to significantly reduce body weight, but significantly reduced body fat compared with baseline and control (Tables 3-4). Twice per week IF at 50% failed to reduce IGF-1, but significantly reduced insulin compared with control. Three times per week IF at 50% significantly reduced body weight and body fat compared with baseline and control (Tables 3-4) and significantly reduced insulin and IGF-1 compared with control (Table 5). In fact, three times per week IF (i.e. the 4:3-50CR) completely mimicked both CR phenotype (lower body weight and body fat) and biomarkers (insulin and IGF-1) by inducing the same degrees of changes in those parameters as the CR.

When IF is introduced at 75% restriction from baseline MER, once per week failed to significantly reduce body weight and body fat compared with baseline and control (Tables 3-4). Also, once per week IF did not reduce insulin and IGF-1 compared with control (Table 5). Twice per week IF at 75% significantly reduced body weight and body fat compared with baseline and control (Tables 3-4). Twice per week IF also significantly reduced IGF-1 and insulin compared with control (Table 5). But the reduction in body fat, insulin and IGF-1 did not match the reduction induced by CR, indicating the 5:2-75CR regimen is not as effective as CR.

Three times per week IF at 75% significantly reduced body weight and body fat compared with baseline and control (Tables 3-4) and significantly reduced insulin and IGF-1 compared with control (Table 5). Three times per week IF (i.e., the 4:3-75CR) induced lower body weight and body fat than CR, but the biomarkers (insulin and IGF-1) induced by three time per weeks at 75% was compared with those induced by CR (Table 5). As such, IF at 75%, while more restrictive than CR, does not provide any better insulin or IGF-1.

In summary, IF at 25% (up to three days per week) failed to mimic any CR phenotype or biomarker. Twice per week IF at 75% partially mimicked CR phenotype. Three days per week IF at 75% induced more severe phenotype change than CR with comparable CR biomarkers. 50% IF at the frequency of 3 days per week mimic the CR phenotype and biomarkers completely.

### Example 2

Five month-old male C57BL6J mice were fed with a high fat diet (HFD, 45%fat) for 5 month to develop obesity. After this feeding period, mice were separated into groups and fed diets based on percentages of MER using a standard AIN-93M diet (Product D10012M available from Research diets, Inc.) as described in Table 6.

**Table 6**

| | **Days of the w eek** | | | | | | |
|---|---|---|---|---|---|---|---|
| **Groups** | **M** | **T** | **W** | **R** | **F** | **Sa** | **Su** |
| **M** | 100% | 100% | 100% | 100% | 100% | 100% | 100% |
| **CR** | 75% | 75% | 75% | 75% | 75% | 75% | 75% |
| **IF1** | 50% | 50% | 50% | 100% | 100% | 100% | 100% |
| **IF2** | 50% | 50% | 50% | Ad libitum | Ad libitum | Ad libitum | Ad libitum |
| **IF3** | 100% | 50% | 100% | 50% | 100% | 50% | 100% |
| **IF4** | Ad libitum | 50% | Ad libitum | 50% | Ad libitum | 50% | Ad libitum |

Mice were lodged individually per cage, in 12-h light/dark cycles, and given water ad libitum. Body composition were measured on Day1 and every 30 days using the EchoMRI-700 Body Composition Analyzer (Echo Medical Systems, Houston,Texas). Samples were collected, after which, homeostasis was confirmed by visual inspection.

After 6 months of dietary intervention, blood and tissue samples were collected after 12 h of overnight fasting as well as final weight measurements. Resulting data is provided in Table 7.

**Table 7**

| Group | Body Weight Start (g) | Body Weight End (g) | Weight loss (%) | Fat Start (%) | Fat End (%) | Lean Start (g) | Lean End (g) |
|---|---|---|---|---|---|---|---|
| M | 34.2 | 32.3 | 4.8 | 27.4 | 22.2 | 24.4 | 23.7 |
| CR | 33.8 | 24.6 | 27.0 | 27.8 | 14.1 | 24.1 | 21.2 |
| IF1 | 33.2 | 25.1 | 23.1 | 26.7 | 14.4 | 24.4 | 22.3 |
| IF2 | 33.4 | 30.5 | 7.2 | 25.2 | 20.4 | 24.3 | 23.6 |
| IF3 | 33.6 | 25.2 | 25.2 | 26.7 | 14.7 | 24.2 | 22.1 |
| IF4 | 33.4 | 31.2 | 6.1 | 26.9 | 22.7 | 23.9 | 23.6 |

While both 4:3 ad lib regimens (IF2 and IF4) led to much smaller reduction in both body weight and % body fat as compared to traditional CR and previously described 4:3 maintenance regimens (IF 1 and IF3), both IF2 and IF4 provided weight loss and, surprisingly superior lean body mass reservation. On the other hand, 4:3 maintenance regimens (IF 1 and IF3) mimic CR 100%.

### Example 3

Male post-weaned rats were fed with a high fat diet (HFD, 45% fat) for 14 weeks to induce overweight in the rats. After this feeding period, the rats were separated into groups with 12 rats per group for 6 months and fed diets based on percentages of MER using a standard AIN-93M diet (Product D10012M available from Research diets, Inc.) as follows:
Control group: the rats that received the AIN-93M diet (Control) continued with the same feeding pattern for 6 months.

A group with 25% intermittent caloric restriction once per week (6:1-25CR): The rats were fed 75% of their MER one day with the 25% CR diet and 100% of their MER with the control diet for six days.

A group with 25% intermittent caloric restriction twice per week (5:2-25CR): The rats were fed 75% of their MER two days with the 25% CR diet and 100% of their MER with the control diet for 5 days.

A group with 25% intermittent caloric restriction three per week (4:3-25CR): The rats were fed 75% of their MER 3 days with the 25% CR diet and 100% of their MER with the control diet for 4 days.

A group with 50% intermittent caloric restriction once per week (6:1-50CR): The rats were fed 50% of their MER one day with the 50% ICR diet and 100% of their MER with the control diet for six days.

A group with 50% intermittent caloric restriction twice per week (5:2-50CR): The rats were fed 50% of their MER two days with the 50% ICR diet and 100% of their MER with the control diet for 5 days.

A group with 50% intermittent caloric restriction three per week (4:3-50CR): The rats were fed 50% of their MER 3 days with the 50% ICR diet and 100% of their MER with the control diet for 4 days.

A group with 75% intermittent caloric restriction once per week (6:1-75CR): The rats were fed 25% of their MER one day with the 75% ICR diet and 100% of their MER with the control diet for six days.

A group with 75% intermittent caloric restriction twice per week (5:2-75CR): The rats were fed 25% of their MER two days with the 75% ICR diet and 100% of their MER with the control diet for 5 days.

A group with 75% intermittent caloric restriction three per week (4:3-75CR): The rats were fed 25% of their MER three days with the 75% ICR diet and 100% of their MER with the control diet for 4 days.

During the 6 months of feedings study, the rats in all test groups consumed same amount of protein, fat, vitamins, and minerals as the rats in the control group. The reduced calories came only from reduced carbohydrates intake from the specially-formulated diets. The test diet compositions are provided in Table 8.

**Table 8**

| | Control | 25% Diet | 50% Diet | 75% Diet |
|---|---|---|---|---|
| Protein % | 12.57 | 16.76 | 25.15 | 49.23 |
| Fat % | 4.00 | 5.32 | 8.00 | 15.10 |
| Ash % | 2.80 | 3.73 | 5.60 | 11.20 |
| C. Fiber % | 5.00 | 5.60 | 7.20 | 10.50 |
| Moisture % | 10.00 | 10.00 | 10.00 | 10.00 |
| CHO% | 65.63 | 58.59 | 44.06 | 3.97 |

Rats were lodged individually per cage, in 12-h light/dark cycles, and given water ad libitum. Blood was collected (0.5 ml) for the measurements of blood triglycerides (TG) and for metabolomics study from rats in all groups at end of the study. Serum TG level was determined using the Abaxis Piccolo Xpress^{™} Lipid Panel Reagent Disc. Results of the blood triglyceride levels (TAG) are shown in Table 9.

**Table 9**

| Diet | TAG (mg/dL) |
|---|---|
| Control | 186.8 |
| 6:125% | 224.3 |
| 5:2 25% | 169.0 |
| 4:3 25% | 122.8 |
| 6:1 50% | 147.7 |
| 5:2 50% | 118.8 |
| 4:3 50% | 110.0 |
| 6:1 75% | 160.6 |
| 5:2 75% | 105.7 |
| 4:3 75% | 86.8 |

The results (Table 9) showed that the rats in the test group with only one-day per week reduction in caloirc intake from dietary carbohydrate failed to significantly lower blood TG compared with that of the control rats. Even 25% reduction from baseline MER two days per week failed to reduce blood TG significantly compared with the control group (Table 9). Rats fed 50% and 75% reduction from baseline MER two days per week significnatly reduced blood TG compared with the control rats. Rats fed 25%, 50% and 75% reduction from baseline MER significantly reduced blood TG compared with the control rats.

As shown in Table 10, the 5:2 25% and 4:3 25% regimens increased indole acrylate (IA) and indole-3- propionic acid (IPA) to similar levels. However, 4:3 50% regimen increased IA and IPA more than 5:2 50% regimen. Both 5:2 75% and 4:3 75% regimens maximzied IA increase, while 4:3 75% regimen enhanced IPA more than 5:2 75% regimen. Indole-3-propionic acid (IPA), is a deamination product of tryptophan, present in biological fluids including blood and CSF, and function an antioxidant and effective free radical scavenger.

**Table 10**

| Indole compounds | Folds increase over the control group for each diet listed below | | | | | | | | |
|---|---|---|---|---|---|---|---|---|---|
| | 6:1 | 5:2 | 4:3 | 6:1 | 5:2 | 4:3 | 6:1 | 5:2 | 4:3 |
| | 25% | 25% | 25% | 50% | 50% | 50% | 75% | 75% | 75% |
| Indole acrylate (IA) | 1.46 | 1.86* | 1.58* | 1.37 | 1.96* | 3.3* | 0.88 | 3.62* | 3.81* |
| Indole-3-propionic acid (IPA) | 1.59 | 2.07* | 1.92* | 1.37 | 2.26* | 3.07* | 1.06 | 3.56* | 4.82* |

| | | | | | | | | | |
|---|---|---|---|---|---|---|---|---|---|
| * Statisically significant increase (p<0.05) over the control group | | | | | | | | | |

As shown in Table 11, the 4:3 50%, 6:1 75% and 4:3 75% regimens decreased 13-Hydroxyoctadecadienoic acid (13-HODE) and 9-Hydroxyoctadecadienoic acid (9-HODE) to similar levels. The 4:3 25% regimen slightly decreased 13-HODE and 9-HODE. As such, the data provides a surprising discovery that even with identical dietary intake of omega-6 PUFAs, blood lipid inflammatory mediators, 13-HODE and 9-HODE, were reduced in rats when they were maintained on nutritional regimens of consuming 25% less of MERs by reducing dietary carbohydrate three days per week or between 50% and 75% less of MERs by reducing dietary carbohydrates one to three days per week while consume 100% MERs during the remaining days of the week.

**Table 11**

| lipid inflammatory mediators | Folds decrease over the control group | | | | | | | | |
|---|---|---|---|---|---|---|---|---|---|
| | 6:1 | 5:2 | 4:3 | 6:1 | 5:2 | 4:3 | 6:1 | 5:2 | 4:3 |
| | 25% | 25% | 25% | 50% | 50% | 50% | 75% | 75% | 75% |
| 13-Hydroxyoctadecadienoic acid (13-HODE) + 9-Hydroxyoctadecadienoic acid (9-HODE) | 1.47 | 0.93 | 0.75 | 0.85 | 0.72 | 0.6* | 0.56* | 0.73 | 0.51* |

| | | | | | | | | | |
|---|---|---|---|---|---|---|---|---|---|
| * Statisically significant increase (p<0.05) over the control group | | | | | | | | | |

In the specification, there have been disclosed typical preferred embodiments of the invention. Although specific terms are employed, they are used in a generic and descriptive sense only and not for purposes of limitation. The scope of the invention is set forth in the claims. Obviously many modifications and variations of the invention are possible in light of the above teachings.

## Claims

1. A non-therapeutic method for feeding an animal to impart a non-therapeutic health benefit to the animal via intermittent caloric restriction dieting, wherein the non-therapeutic health benefit is selected from the group consisting of: preserving lean body mass, preventing or minimizing loss of lean body mass during the weight loss by the animal, preventing a reduction in energy metabolism by the animal, reducing the risk of regaining weight by the animal after weight loss, maintaining ideal body weight, and ameliorating undesirable animal behaviors associated with reduced caloric intake, the method comprising:
feeding the animal a caloric maintenance diet containing calories that meet the animal's maintenance energy requirements for a caloric maintenance period; and
feeding the animal a caloric reduction diet containing from about 40% to about 80% of the calories contained in the caloric maintenance diet for a caloric reduction period;
wherein the caloric maintenance period and the caloric reduction period is in a ratio of about 4:3 or about 5:2.

2. A kit comprising in separate containers in a single package or in separate containers in a virtual package, (1) a complete and balanced first food composition to provide a caloric maintenance diet containing calories that meet an animal's maintenance energy requirements, (2) a complete and balanced second food composition to provide a caloric reduction diet containing from about 40% to about 80% of the calories contained in the caloric maintenance diet and (3) instructions for using the the food compositions, for use in a method of preventing hypertriglyceridemia, treating hypertriglyceridemia, preventing atherosclerosis, treating atherosclerosis, preventing cardiovascular disease, treating cardiovascular disease, minimizing oxidative stress, preventing age-related diseases, treating age-related diseases, preventing cancer, treating cancer, preventing Alzheimer's disease, treating Alzheimer's disease, preventing Parkinson's disease, treating Parkinson's disease, preventing neurodegenerative diseases, treating neurodegenerative diseases, preventing tissue damage, treating tissue damage, preventing high blood pressure, treating high blood pressure, preventing inflammatory conditions, treating inflammatory conditions, preventing attention deficit hyperactivity disorder (ADHD), treating attention deficit hyperactivity disorder (ADHD), preventing Lafora disease, treating Lafora disease, preventing fragile X syndrome, treating fragile X disorder, treating sickle-cell diseases, preventing lichen planus, treating lichen planus, preventing vitiligo, treating vitiligo, preventing autism, treating autism, preventing infections, treating infections, preventing chronic fatigue syndrome, treating chronic fatigue syndrome, preventing depression, treating depression, preventing Asperger syndrome, or treating Asperger syndrome in an animal, the method comprising:
feeding the animal the caloric maintenance diet containing calories that meet the animal's maintenance energy requirements for a caloric maintenance period; and
feeding the animal the caloric reduction diet containing from about 40% to about 80% of the calories contained in the caloric maintenance diet for a caloric reduction period;
wherein the caloric maintenance period and the caloric reduction period is in a ratio of about 4:3 or about 5:2.

3. The method of claim 1 or the kit for use according to claim 2, wherein the caloric maintenance period is 4 days and caloric reduction period is 3 days.

4. The method of claim 3 or the kit for use according to claim 3, wherein the 4 days and the 3 days are consecutive.

5. The method of claim 3 or the kit for use according to claim 3, wherein the 4 days and the 3 days are non-consecutive.

6. The method of claim 1 or the kit for use according to claim 2, wherein the feeding for the caloric maintenance period and the feeding for the caloric reduction period are repeated over a period of at least 1 month.

7. The method of claim 1 or the kit for use according to claim 2, wherein the feeding for the caloric maintenance period and the feeding for the caloric reduction period are repeated over a period of at least 6 months.

8. The method of claim 1 or the kit for use according to claim 2, wherein the caloric reduction diet contains about 50% of the calories needed to meet the animal's daily maintenance requirement for energy.

9. A non-therapeutic method for feeding an animal to impart a non-therapeutic health benefit to the animal via intermittent caloric restriction dieting, wherein the non-therapeutic health benefit is selected from the group consisting of: preserving lean body mass, preventing or minimizing loss of lean body mass during the weight loss by the animal, preventing a reduction in energy metabolism by the animal, reducing the risk of regaining weight by the animal after weight loss, maintaining ideal body weight, and ameliorating undesirable animal behaviors associated with reduced caloric intake, the method comprising:
feeding the animal a diet without limiting caloric intake for an ad libitum feeding period; and
feeding the animal a caloric reduction diet containing from about 40% to about 80% of calories that meet the animal's maintenance energy requirements for a caloric reduction period;
wherein the ad libitum period and the caloric reduction period is in a ratio of about 4:3 or about 5:2.

10. A kit comprising in separate containers in a single package or in separate containers in a virtual package, (1) a complete and balanced first food composition to provide a diet without a limit on caloric intake, (2) a complete and balanced second food composition to provide a caloric reduction diet containing from about 40% to about 80% of calories that meet an animal's maintenance energy requirements and (3) instructions for using the food compositions, for use in a method of preventing hypertriglyceridemia, treating hypertriglyceridemia, preventing atherosclerosis, treating atherosclerosis, preventing cardiovascular disease, treating cardiovascular disease, minimizing oxidative stress, preventing age-related diseases, treating age-related diseases, preventing cancer, treating cancer, preventing Alzheimer's disease, treating Alzheimer's disease, preventing Parkinson's disease, treating Parkinson's disease, preventing neurodegenerative diseases, treating neurodegenerative diseases, preventing tissue damage, treating tissue damage, preventing high blood pressure, treating high blood pressure, preventing inflammatory conditions, treating inflammatory conditions, preventing attention deficit hyperactivity disorder (ADHD), treating attention deficit hyperactivity disorder (ADHD), preventing Lafora disease, treating Lafora disease, preventing fragile X syndrome, treating fragile X disorder, treating sickle-cell diseases, preventing lichen planus, treating lichen planus, preventing vitiligo, treating vitiligo, preventing autism, treating autism, preventing infections, treating infections, preventing chronic fatigue syndrome, treating chronic fatigue syndrome, preventing depression, treating depression, preventing Asperger syndrome, or treating Asperger syndrome in an animal, the method comprising:
feeding the animal the diet without a limit on caloric intake for an ad libitum feeding period; and
feeding the animal the caloric reduction diet containing from about 40% to about 80% of calories that meet the animal's maintenance energy requirements for a caloric reduction period;
wherein the ad libitum period and the caloric reduction period is in a ratio of about 4:3 or about 5:2.

11. The method of claim 9 or the kit for use according to claim 10, wherein the ad libitum period is 4 days and caloric reduction period is 3 days.

12. The method of claim 9 or the kit for use according to claim 10, wherein the ad libitum feeding period and the caloric reduction period are consecutive.

13. The method of claim 9 or the kit for use according to claim 10, wherein the feeding for the ad libitum period and the feeding for the caloric reduction period are repeated over a period of at least 1 month.

14. The method of claim 9 or the kit for use according to claim 10, wherein the feeding for the ad libitum period and the feeding for the caloric reduction period are repeated over a period of at least 6 months.

15. The method of claim 9 or the kit for use according to claim 10, wherein the caloric reduction diet contains about 50% of the calories needed to meet the animal's daily maintenance requirement for energy.

## Patentansprüche

1. Nicht therapeutisches Verfahren zum Füttern eines Lebewesens, um dem Lebewesen einen nicht therapeutischen Gesundheitsvorteil über eine zeitweilig kalorienrestriktive Nahrungsgabe zu gewähren, wobei der nicht therapeutische Gesundheitsvorteil aus der Gruppe ausgewählt ist, bestehend aus: Bewahren einer mageren Körpermasse, Verhindern oder Minimieren eines Verlusts der mageren Körpermasse während des Gewichtsverlusts durch das Lebewesen, Verhindern einer Reduktion eines Energiestoffwechsels durch das Lebewesen, Reduzieren des Risikos einer Wiedergewinnung von Gewicht durch das Lebewesen nach dem Gewichtsverlust, Erhalten eines idealen Körpergewichts und Verbessern unerwünschter Verhalten von Lebewesen in Verbindung mit reduzierter Kalorienaufnahme, das Verfahren umfassend:
Füttern des Lebewesens mit einer Nahrung für eine kalorische Erhaltung, die Kalorien enthält, die einen Erhaltungsenergiebedarf des Lebewesens decken, für eine Periode der kalorischen Erhaltung; und
Füttern des Lebewesens mit einer Nahrung für eine kalorische Reduktion, die etwa 40 % bis etwa 80 % der Kalorien enthält, die in der Nahrung für die kalorische Erhaltung enthalten sind, für eine Periode der kalorischen Reduktion;
wobei die Periode der kalorischen Erhaltung und die Periode der kalorischen Reduktion in einem Verhältnis von etwa 4 : 3 oder etwa 5 : 2 stehen.

2. Kit, umfassend in separaten Behältern in einem einzelnen Paket oder in separaten Behältern in einem virtuellen Paket, (1) eine vollständige und ausgewogene erste Lebensmittelzusammensetzung, um eine Nahrung für die kalorische Erhaltung bereitzustellen, die Kalorien enthält, die den Erhaltungsenergiebedarf eines Lebewesen decken, (2) eine vollständige und ausgewogene zweite Lebensmittelzusammensetzung, um eine Nahrung für die kalorische Reduktion bereitzustellen, die etwa 40 % bis 80 % der Kalorien enthält, die in der Nahrung für die kalorische Erhaltung enthalten sind, und (3) Anweisungen zum Verwenden der Lebensmittelzusammensetzungen, zur Verwendung in einem Verfahren zum Verhindern von Hypertriglyceridämie, Behandeln von Hypertriglyceridämie, Verhindern von Atherosklerose, Behandeln von Atherosklerose, Verhindern von kardiovaskulären Erkrankungen, Behandeln von kardiovaskulären Erkrankungen, Minimieren von oxidativem Stress, Verhindern von altersbezogenen Erkrankungen, Behandeln von altersbezogenen Erkrankungen, Verhindern von Krebs, Behandeln von Krebs, Verhindern von Alzheimer, Behandeln von Alzheimer, Verhindern von Parkinson, Behandeln von Parkinson, Verhindern von neurodegenerativen Erkrankungen, Behandeln von neurodegenerativen Erkrankungen, Verhindern von Gewebeschäden, Behandeln von Gewebeschäden, Verhindern von Bluthochdruck, Behandeln von Bluthochdruck, Verhindern von inflammatorischen Zuständen, Behandeln von inflammatorischen Zuständen, Verhindern von Aufmerksamkeitsdefizit-Hyperaktivitätsstörung (ADHS), Behandeln von Aufmerksamkeitsdefizit-Hyperaktivitätsstörung (ADHS), Verhindern von Lafora-Krankheit, Behandeln von Lafora-Krankheit, Verhindern von fragilem-X-Syndrom, Behandeln von fragiler-X-Störung, Behandeln von Sichelzellerkrankungen, Verhindern von Lichen planus, Behandeln von Lichen planus, Verhindern von Vitiligo, Behandeln von Vitiligo, Verhindern von Autismus, Behandeln von Autismus, Verhindern von Infektionen, Behandeln von Infektionen, Verhindern von chronischem Fatigue Syndrom, Behandeln von chronischem Fatigue-Syndrom, Verhindern von Depression, Behandeln von Depression, Verhindern von Asperger-Syndrom oder Behandeln von Asperger-Syndrom in einem Lebewesen, das Verfahren umfassend:
Füttern des Lebewesens mit der Nahrung für die kalorische Erhaltung, die Kalorien enthält, die den Erhaltungsenergiebedarf des Lebewesens decken, für eine Periode der kalorischen Erhaltung; und
Füttern des Lebewesens mit der Nahrung für die kalorische Reduktion, die etwa 40 % bis etwa 80 % der Kalorien enthält, die in der Nahrung für die kalorische Erhaltung enthalten sind, für eine Periode der kalorischen Reduktion;
wobei die Periode der kalorischen Erhaltung und die Periode der kalorischen Reduktion in einem Verhältnis von etwa 4 : 3 oder etwa 5 : 2 stehen.

3. Verfahren nach Anspruch 1 oder Kit zur Verwendung nach Anspruch 2, wobei die Periode der kalorischen Erhaltung 4 Tage beträgt und die Periode der kalorischen Reduktion 3 Tage beträgt.

4. Verfahren nach Anspruch 3 oder Kit zur Verwendung nach Anspruch 3, wobei die 4 Tage und die 3 Tage aufeinander folgen.

5. Verfahren nach Anspruch 3 oder Kit zur Verwendung nach Anspruch 3, wobei die 4 Tage und die 3 Tage nicht aufeinander folgen.

6. Verfahren nach Anspruch 1 oder Kit zur Verwendung nach Anspruch 2, wobei das Füttern für die Periode der kalorischen Erhaltung und das Füttern für die Periode der kalorischen Reduktion über eine Periode von mindestens 1 Monat wiederholt werden.

7. Verfahren nach Anspruch 1 oder Kit zur Verwendung nach Anspruch 2, wobei das Füttern für die Periode der kalorischen Erhaltung und das Füttern für die Periode der kalorischen Reduktion über eine Periode von mindestens 6 Monaten wiederholt werden.

8. Verfahren nach Anspruch 1 oder Kit zur Verwendung nach Anspruch 2, wobei die Nahrung für die kalorische Reduktion etwa 50 % der Kalorien enthält, die erforderlich sind, um den täglichen Erhaltungsenergiebedarf des Lebewesens zu decken.

9. Nicht therapeutisches Verfahren zum Füttern eines Lebewesens, um dem Lebewesen einen nicht therapeutischen Gesundheitsvorteil über eine zeitweilig kalorienrestriktive Nahrungsgabe zu gewähren, wobei der nicht therapeutische Gesundheitsvorteil aus der Gruppe ausgewählt ist, bestehend aus: Bewahren der mageren Körpermasse, Verhindern oder Minimieren des Verlusts der mageren Körpermasse während des Gewichtsverlusts durch das Lebewesen, Verhindern einer Reduktion des Energiestoffwechsels durch das Lebewesen, Reduzieren des Risikos der Wiedergewinnung von Gewicht durch das Lebewesen nach dem Gewichtsverlust, Erhalten des idealen Körpergewichts und Verbessern unerwünschter Verhalten von Lebewesen in Verbindung mit reduzierter Kalorienaufnahme, das Verfahren umfassend:
Füttern des Lebewesens mit einer Nahrung, ohne die Kalorienaufnahme zu begrenzen, für eine beliebige Fütterungsperiode; und
Füttern des Lebewesens mit einer Nahrung für die kalorische Reduktion, die etwa 40 % bis etwa 80 % der Kalorien enthält, die den Erhaltungsenergiebedarf des Lebewesens decken, für eine Periode der kalorischen Reduktion;
wobei die beliebige Periode und die Periode der kalorischen Reduktion in einem Verhältnis von etwa 4 : 3 oder etwa 5 : 2 stehen.

10. Kit, umfassend in separaten Behältern in einem einzelnen Paket oder in separaten Behältern in einem virtuellen Paket, (1) eine vollständige und ausgewogene erste Lebensmittelzusammensetzung, um eine Nahrung ohne eine Begrenzung der Kalorienaufnahme bereitzustellen, (2) eine vollständige und ausgewogene zweite Lebensmittelzusammensetzung, um eine Nahrung für die kalorische Reduktion bereitzustellen, die etwa 40 % bis 80 % der Kalorien enthält, die den Erhaltungsenergiebedarf eines Lebewesens decken, und (3) Anweisungen zum Verwenden der Lebensmittelzusammensetzungen, zur Verwendung in einem Verfahren zum Verhindern von Hypertriglyceridämie, Behandeln von Hypertriglyceridämie, Verhindern von Atherosklerose, Behandeln von Atherosklerose, Verhindern von kardiovaskulären Erkrankungen, Behandeln von kardiovaskulären Erkrankungen, Minimieren von oxidativem Stress, Verhindern von altersbezogenen Erkrankungen, Behandeln von altersbezogenen Erkrankungen, Verhindern von Krebs, Behandeln von Krebs, Verhindern von Alzheimer, Behandeln von Alzheimer, Verhindern von Parkinson, Behandeln von Parkinson, Verhindern von neurodegenerativen Erkrankungen, Behandeln von neurodegenerativen Erkrankungen, Verhindern von Gewebeschäden, Behandeln von Gewebeschäden, Verhindern von Bluthochdruck, Behandeln von Bluthochdruck, Verhindern von inflammatorischen Zuständen, Behandeln von inflammatorischen Zuständen, Verhindern von Aufmerksamkeitsdefizit-Hyperaktivitätsstörung (ADHS), Behandeln von Aufmerksamkeitsdefizit-Hyperaktivitätsstörung (ADHS), Verhindern von Lafora-Krankheit, Behandeln von Lafora-Krankheit, Verhindern von fragilem-X-Syndrom, Behandeln von fragiler-X-Störung, Behandeln von Sichelzellerkrankungen, Verhindern von Lichen planus, Behandeln von Lichen planus, Verhindern von Vitiligo, Behandeln von Vitiligo, Verhindern von Autismus, Behandeln von Autismus, Verhindern von Infektionen, Behandeln von Infektionen, Verhindern von chronischem Fatigue Syndrom, Behandeln von chronischem Fatigue-Syndrom, Verhindern von Depression, Behandeln von Depression, Verhindern von Asperger-Syndrom oder Behandeln von Asperger-Syndrom in einem Lebewesen, das Verfahren umfassend:
Füttern des Lebewesens mit der Nahrung ohne eine Begrenzung der Kalorienaufnahme für eine beliebige Fütterungsperiode; und
Füttern des Lebewesens mit der Nahrung für die kalorische Reduktion, die etwa 40 % bis etwa 80 % der Kalorien enthält, die den Erhaltungsenergiebedarf des Lebewesens decken, für eine Periode der kalorischen Reduktion;
wobei die beliebige Periode und die Periode der kalorischen Reduktion in einem Verhältnis von etwa 4 : 3 oder etwa 5 : 2 stehen.

11. Verfahren nach Anspruch 9 oder Kit zur Verwendung nach Anspruch 10, wobei die beliebige Periode 4 Tage beträgt und die Periode der kalorischen Reduktion 3 Tage beträgt.

12. Verfahren nach Anspruch 9 oder Kit zur Verwendung nach Anspruch 10, wobei die beliebige Fütterungsperiode und die Periode der kalorischen Reduktion aufeinander folgen.

13. Verfahren nach Anspruch 9 oder Kit zur Verwendung nach Anspruch 10, wobei das Füttern für die beliebige Periode und das Füttern für die Periode der kalorischen Reduktion über eine Periode von mindestens 1 Monat wiederholt werden.

14. Verfahren nach Anspruch 9 oder Kit zur Verwendung nach Anspruch 10, wobei das Füttern für die beliebige Periode und das Füttern für die Periode der kalorischen Reduktion über eine Periode von mindestens 6 Monaten wiederholt werden.

15. Verfahren nach Anspruch 9 oder Kit zur Verwendung nach Anspruch 10, wobei die Nahrung für die kalorische Reduktion etwa 50 % der Kalorien enthält, die erforderlich sind, um den täglichen Erhaltungsenergiebedarf des Lebewesens zu decken.

## Revendications

1. Procédé non thérapeutique destiné à alimenter un animal pour conférer un effet bénéfique non thérapeutique pour la santé à l'animal par l'intermédiaire d'un régime de restriction calorique intermittente, dans lequel l'effet bénéfique non thérapeutique pour la santé est choisi dans le groupe constitué par : préservation de masse corporelle maigre, prévention ou réduction au minimum de la perte de masse corporelle maigre pendant la perte de poids par l'animal, prévention d'une réduction de métabolisme énergétique par l'animal, réduction du risque de reprise de poids par l'animal après une perte de poids, maintien du poids corporel idéal, et amélioration de comportements indésirables de l'animal associés à un apport calorique réduit, le procédé comprenant :
l'alimentation de l'animal avec un régime de maintien calorique contenant des calories qui respectent les besoins énergétiques de maintien de l'animal pendant une période de maintien calorique ; et
l'alimentation de l'animal avec un régime de réduction calorique contenant d'environ 40 % à environ 80 % des calories contenues dans le régime de maintien calorique pendant une période de réduction calorique ;
dans lequel la période de maintien calorique et la période de réduction calorique sont dans un rapport d'environ 4:3 ou d'environ 5:2.

2. Lot comprenant dans des récipients indépendants dans un conditionnement unique ou dans des récipients indépendants dans un conditionnement virtuel, (1) une première composition alimentaire complète et équilibrée pour fournir un régime de maintien calorique contenant des calories qui respectent les besoins énergétiques de maintien d'un animal, (2) une seconde composition alimentaire complète et équilibrée pour fournir un régime de réduction calorique contenant d'environ 40 % à environ 80 % des calories contenues dans le régime de maintien calorique et (3) des instructions d'utilisation des compositions alimentaires, pour utilisation dans un procédé de prévention d'hypertriglycéridémie, de traitement d'hypertriglycéridémie, de prévention d'athérosclérose, de traitement d'athérosclérose, de prévention de maladie cardiovasculaire, de traitement de maladie cardiovasculaire, de réduction au minimum de stress oxydatif, de prévention de maladies liées à l'âge, de traitement de maladies liées à l'âge, de prévention de cancer, de traitement de cancer, de prévention de maladie d'Alzheimer, de traitement de maladie d'Alzheimer, de prévention de maladie de Parkinson, de traitement de maladie de Parkinson, de prévention de maladies neurodégéneratives, de traitement de maladies neurodégéneratives, de prévention de dommage tissulaire, de traitement de dommage tissulaire, de prévention de pression sanguine élevée, de traitement de pression sanguine élevée, de prévention d'affections inflammatoires, de traitement d'affections inflammatoires, de prévention de trouble du déficit d'attention avec hyperactivité (TDAH), de traitement de trouble du déficit d'attention avec hyperactivité (TDAH), de prévention de maladie de Lafora, de traitement de maladie de Lafora, de prévention de syndrome du X fragile, de traitement de trouble du X fragile, de traitement de drépanocytoses, de prévention de lichen plan, de traitement de lichen plan, de prévention de vitiligo, de traitement de vitiligo, de prévention d'autisme, de traitement d'autisme, de prévention d'infections, de traitement d'infections, de prévention de syndrome de fatigue chronique, de traitement de syndrome de fatigue chronique, de prévention de dépression, de traitement de dépression, de prévention de syndrome d'Asperger, ou de traitement de syndrome d'Asperger chez un animal, le procédé comprenant :
l'alimentation de l'animal avec le régime de maintien calorique contenant des calories qui respectent les besoins énergétiques de maintien de l'animal pendant une période de maintien calorique ; et
l'alimentation de l'animal avec le régime de réduction calorique contenant d'environ 40 % à environ 80 % des calories contenues dans le régime de maintien calorique pendant une période de réduction calorique ;
dans lequel la période de maintien calorique et la période de réduction calorique sont dans un rapport d'environ 4:3 ou d'environ 5:2.

3. Procédé selon la revendication 1 ou lot pour utilisation selon la revendication 2, dans lequel la période de maintien calorique est de 4 jours et la période de réduction calorique est de 3 jours.

4. Procédé selon la revendication 3 ou lot pour utilisation selon la revendication 3, dans lequel les 4 jours et les 3 jours sont consécutifs.

5. Procédé selon la revendication 3 ou lot pour utilisation selon la revendication 3, dans lequel les 4 jours et les 3 jours sont non consécutifs.

6. Procédé selon la revendication 1 ou lot pour utilisation selon la revendication 2, dans lequel l'alimentation pendant la période de maintien calorique et l'alimentation pendant la période de réduction calorique sont répétées sur une période d'au moins 1 mois.

7. Procédé selon la revendication 1 ou lot pour utilisation selon la revendication 2, dans lequel l'alimentation pendant la période de maintien calorique et l'alimentation pendant la période de réduction calorique sont répétées sur une période d'au moins 6 mois.

8. Procédé selon la revendication 1 ou lot pour utilisation selon la revendication 2, dans lequel le régime de réduction calorique contient environ 50 % des calories nécessaires pour respecter le besoin de maintien quotidien de l'animal en énergie.

9. Procédé non thérapeutique destiné à alimenter un animal pour conférer un effet bénéfique non thérapeutique pour la santé à l'animal par l'intermédiaire d'un régime de restriction calorique intermittente, dans lequel l'effet bénéfique non thérapeutique pour la santé est choisi dans le groupe constitué par : préservation de masse corporelle maigre, prévention ou réduction au minimum de la perte de masse corporelle maigre pendant la perte de poids par l'animal, prévention d'une réduction de métabolisme énergétique par l'animal, réduction du risque de reprise de poids par l'animal après une perte de poids, maintien du poids corporel idéal, et amélioration de comportements indésirables de l'animal associés à un apport calorique réduit, le procédé comprenant :
l'alimentation de l'animal avec un régime sans limitation d'apport calorique pendant une période d'alimentation à volonté ; et
l'alimentation de l'animal avec un régime de réduction calorique contenant d'environ 40 % à environ 80 % de calories qui respectent les besoins énergétiques de maintien de l'animal pendant une période de réduction calorique ;
dans lequel la période à volonté et la période de réduction calorique sont dans un rapport d'environ 4:3 ou d'environ 5:2.

10. Lot comprenant dans des récipients indépendants dans un conditionnement unique ou dans des récipients indépendants dans un conditionnement virtuel, (1) une première composition alimentaire complète et équilibrée pour fournir un régime dépourvu de limite concernant l'apport calorique, (2) une seconde composition alimentaire complète et équilibrée pour fournir un régime de réduction calorique contenant d'environ 40 % à environ 80 % de calories qui respectent des besoins énergétiques de maintien d'un animal et (3) des instructions d'utilisation des compositions alimentaires, pour utilisation dans un procédé de prévention d'hypertriglycéridémie, de traitement d'hypertriglycéridémie, de prévention d'athérosclérose, de traitement d'athérosclérose, de prévention de maladie cardiovasculaire, de traitement de maladie cardiovasculaire, de réduction au minimum de stress oxydatif, de prévention de maladies liées à l'âge, de traitement de maladies liées à l'âge, de prévention de cancer, de traitement de cancer, de prévention de maladie d'Alzheimer, de traitement de maladie d'Alzheimer, de prévention de maladie de Parkinson, de traitement de maladie de Parkinson, de prévention de maladies neurodégéneratives, de traitement de maladies neurodégéneratives, de prévention de dommage tissulaire, de traitement de dommage tissulaire, de prévention de pression sanguine élevée, de traitement de pression sanguine élevée, de prévention d'affections inflammatoires, de traitement d'affections inflammatoires, de prévention de trouble du déficit d'attention avec hyperactivité (TDAH), de traitement de trouble du déficit d'attention avec hyperactivité (TDAH), de prévention de maladie de Lafora, de traitement de maladie de Lafora, de prévention de syndrome du X fragile, de traitement de trouble du X fragile, de traitement de drépanocytoses, de prévention de lichen plan, de traitement de lichen plan, de prévention de vitiligo, de traitement de vitiligo, de prévention d'autisme, de traitement d'autisme, de prévention d'infections, de traitement d'infections, de prévention de syndrome de fatigue chronique, de traitement de syndrome de fatigue chronique, de prévention de dépression, de traitement de dépression, de prévention de syndrome d'Asperger, ou de traitement de syndrome d'Asperger chez un animal, le procédé comprenant :
l'alimentation de l'animal avec le régime dépourvu de limite concernant l'apport calorique pendant une période d'alimentation à volonté ; et
l'alimentation de l'animal avec le régime de réduction calorique contenant d'environ 40 % à environ 80 % de calories qui respectent les besoins énergétiques de maintien de l'animal pendant une période de réduction calorique ;
dans lequel la période à volonté et la période de réduction calorique sont dans un rapport d'environ 4:3 ou d'environ 5:2.

11. Procédé selon la revendication 9 ou lot pour utilisation selon la revendication 10, dans lequel la période à volonté est de 4 jours et la période de réduction calorique est de 3 jours.

12. Procédé selon la revendication 9 ou lot pour utilisation selon la revendication 10, dans lequel la période d'alimentation à volonté et la période de réduction calorique sont consécutives.

13. Procédé selon la revendication 9 ou lot pour utilisation selon la revendication 10, dans lequel l'alimentation pendant la période à volonté et l'alimentation pendant la période de réduction calorique sont répétées sur une période d'au moins 1 mois.

14. Procédé selon la revendication 9 ou lot pour utilisation selon la revendication 10, dans lequel l'alimentation pendant la période à volonté et l'alimentation pendant la période de réduction calorique sont répétées sur une période d'au moins 6 mois.

15. Procédé selon la revendication 9 ou lot pour utilisation selon la revendication 10, dans lequel le régime de réduction calorique contient environ 50 % des calories nécessaires pour respecter le besoin de maintien quotidien de l'animal en énergie.
